# EUROPEAN PATENT SPECIFICATION

(11) **EP 1 918 203 B1**
(45) Date of publication and mention of the grant of the patent: **31.03.2010**
(21) Application number: 07380156.5
(22) Date of filing: 31.05.2007
(51) Int. Cl.: B64D 41/00, B64C 7/02

(54) **Tail cone for aircraft with movable fairing and support structure for auxiliary power unit and the ancillary elements thereof**
Heckkonus für ein Flugzeug mit beweglicher Verkleidung und Stützstruktur für ein Hilfstriebwerk sowie Hilfselemente dafür
Pointe arrière pour avion avec carénage mobile et structure de support pour unité de puissance auxiliaire et éléments auxiliaires correspondants

(30) Priority: 31.10.2006 ES 200602770
(43) Date of publication of application: 07.05.2008
(73) Proprietor: Airbus Operations S.L., 28906 Getafe, Madrid (ES)
(72) Inventor: Martino Gonzalez, Esteban, 39005 Santander (ES); Sanz Martinez, Pablo Timoteo, 28861 Paracuellos del Jarama (ES); Alvaro Granero, David, 28021 Madrid (ES)
(74) Representative: Ungria Lopez, Javier

(56) References cited:
- EP-A- 0 361 901
- FR-A- 2 291 091
- GB-A- 1 375 868
- US-A- 6 039 287
- US-B1- 6 220 546

## Description

### TECHNICAL FIELD OF THE INVENTION

This invention pertains to the aeronautical field, more specifically to building of aircraft tails and to the systems for housing the auxiliary power unit and the ancillary elements thereof inside the tail cone, and more specifically to the field of the support structures for said auxiliary power unit and the systems which facilitate access thereto for maintenance tasks.

### STATE OF THE ART PRIOR TO THE INVENTION

Due to the auxiliary power unit being a possible fire focal point, the current trend among most manufacturers is that of locating said auxiliary power unit in the tail cone of the rear fuselage of the aircraft, given that on said tail cone being a secondary structure, any possible damage to or fault thereof would not mean a failure leading to disaster. Therefore, in order to prevent possible fires in the primary structures of the aircraft, the auxiliary power unit is positioned in the tail cone, additionally protecting the rest of the fuselage by means of a firewall bulkhead. In addition to the auxiliary power unit, the tail cone also houses other systems including the air intake and the exhaust pipe, which are systems ancillary to the power unit necessary for the proper working order thereof.

In the tail cone, the requirement of safely housing the auxiliary power unit is, of course, combined with that of providing an appropriate aerodynamic cover which will guarantee the proper working order of the aircraft.

The conventional constructions of the systems which support the auxiliary power unit inside the tail cone consist of a system comprised of a frame of rods or bars secured directly to the semisingle-hull structure of the tail cone. The inside of the tail cone is accessed by way of a door on the underside thereof, and due to the systems which support the auxiliary power unit and to the auxiliary power unit proper, the amount of room left inside is quite small, thus hindering access to all points of the machinery for performing the necessary maintenance and repair tasks. This currently means lengthier maintenance task performance times, resulting in low efficiency and high costs.

In addition to the above, it must be taken into account that the high electrical demand on modern aircraft and the stringent noise-related requirements of the regulations are currently making the auxiliary power units and the ancillary systems thereof increasingly larger in size, which is increasingly worsening the space-related problem.

To provide a solution to this problem, enlarging the size of the tail cone to increase the amount of space inside thereof would not be a feasible solution, given that this would mean a penalization in weight and in aerodynamics which would affect the aircraft flying properly.

In all of these conventional constructions, the tail cone is fixed to the fuselage and is not removed for the auxiliary power unit maintenance and repair tasks. There is a prior design of a sliding tail cone built on an aircraft, but both the system for the building thereof would not solve the problems posed herein, given that, in this case, the tail cone houses a small antenna, which, in conjunction with the electrical equipment, which are much lighter in weight than an auxiliary power unit, rest directly on the rest of the fuselage and not on the tail cone cover.

Therefore, no system exists to date which provides a solution to the problem of supporting the auxiliary power unit and the ancillary systems thereof, meeting all of the safety requirements, in the smallest space possible in order to favor aerodynamics, but which facilitates efficient maintenance and repair of the auxiliary power unit meeting all of the current high requirements.

Document US 6 039 287 describes a detachable integral aircraft tailcone and power assembly mountable to the body of an aircraft using a height adjustable dolly. The tailcone of said document comprising a cover and an assembly of ancillary systems. The cover comprising a casing or fairing which is rotatable.

A system which would provide a solution to the existing problems in the state of the art was therefore desirable.

### DESCRIPTION OF THE INVENTION

This invention is for the purpose of overcoming the drawbacks of the aforementioned state of the art by means of an aircraft tail cone with movable fairing and a support structure for the auxiliary power unit and the ancillary elements thereof.

By means of said tail cone, the auxiliary power unit and the ancillary elements thereof are securely attached to a fixed element of the tail cone, and a movable fairing moves, opening and closing the tail cone, therefore leaving the auxiliary power unit exposed and thus facilitating the auxiliary power unit maintenance and repair tasks. By building the cover in this manner, the movable fairing does not serve as a support structure for the auxiliary power unit and the ancillary elements thereof. Therefore, it is necessary to add an independent structure to support said auxiliary power unit and ancillary elements.

The tail cone comprising the object of this invention comprises a cover housing the auxiliary power unit and the ancillary elements thereof. This cover is comprised of a fixed forward section which serves to attach the tail cone to the rest of the aircraft fuselage, and the movable fairing which affords the possibility of opening and closing the tail cone in order to be able to readily access the interior thereof. The fixed forward section serves to support the movable fairing when it is in the closed position, serving to support, in turn, the aforementioned support structure necessary for supporting the auxiliary power unit and the ancillary elements thereof.

According to the invention the fairing can move longitudinally along the longitudinal axis of the aircraft between a closed position in which it is attached to the fixed forward section, and the cover is closed and houses the support structure with the auxiliary power unit and the ancillary elements thereof, and an open position in which the movable fairing separated from the fixed forward section and the cover is open, leaving the support structure with the auxiliary power unit exposed and facilitating access for auxiliary power unit maintenance and repair tasks.

The longitudinal movement of the movable fairing is achieved by means of some telescopic rails which are secured to the fixed forward section, said movable fairing being attached to the last section of said rails, such that when the telescopic rails extend, the movable fairing easily moves longitudinally.

In one embodiment of the fixed forward section, this section is comprised of two ring-frames, one forward and one aft, with a cover panel and rigidizing elements between the two, given that this fixed forward will serve to support the movable fairing when the fairing is in the closed position and serving to support, in turn, the aforementioned support structure necessary for supporting the auxiliary power unit and the ancillary elements thereof.

On the interior of the tail cone is the support structure serving to support the auxiliary power unit and the ancillary systems thereof. This support structure is made of materials resistant to high temperatures for the purpose of being able to withstand the high temperatures which the auxiliary power unit they support reaches, and depending upon the embodiments, takes the form of a frame of different elements. One end of the support structure is secured to the fixed forward section, the opposite end being cantilevered.

In one particular embodiment of the support structure, said structure is comprised of longitudinal and transverse elements.

In different embodiments of the movable fairing, this fairing may be folding and secured to the fixed forward section by way of means of articulation defining a turning axis. To achieve the opening of the cover, the movable fairing turns on this turning axis of the means of articulation, such that it leaves the auxiliary unit and the ancillary elements thereof exposed in order to facilitate access to the same.

In a different embodiment of the movable fairing, likewise based on the folding of elements, said movable fairing is comprised of two symmetrical parts folding laterally which each turn on horizontal axes substantially parallel to the longitudinal axis of the aircraft, arranged in an fixed upper element secured to the upper part of the fixed forward section. On these folding elements turning, the cover is opened and access to the auxiliary power unit and the ancillary elements thereof is allowed.

In the preferred embodiment, the cover has at its back end an additional movable folding fairing which is attached to the principal movable fairing by additional means of articulation which define a turning axis. Therefore, the movable fairing moves longitudinally, and the additional movable fairing turns on the turning axis and leaves the auxiliary power unit exposed at the rear part of the tail cone.

Another embodiment of the tail cone cover includes a fixed end fairing which surrounds the auxiliary power unit exhaust pipe and which is locked to the same, remaining fixed. Therefore, the movable fairing is the central part of the cover and, on moving longitudinally, moves from a closed position in which it is located between the fixed forward section and the fixed end fairing and attached to both thereof, to an open position in which the movable fairing, in its forward movement, separates from the fixed forward section, leaves the fixes final fairing on the inside thereof and moves past the fixed final fairing, the cover being left open and exposing the support structure with the auxiliary power unit.

The closing of the movable fairing to the fixed forward section of the tail cone is achieved by means of simple conventional anchoring means providing for fast, easy actuation when it is necessary to open the tail cone cover.

To prevent deformations and failures, the movable fairing may include reinforcement elements such as stringers, half ring-frames or complete ring-frames. Another option consists of covering the movable fairing with sandwich type covers providing it with the necessary rigidity without adding greatly to its weight.

The support structure can be firmly attached by means of metal attachment fittings to the forward ring-frame of the fixed forward section, to the space existing between the forward ring-frame and the aft ring-frame, or the aft ring-frame by means of additional counter-fittings in the space existing between the forward ring-frame and the aft ring-frame for safely transmitting the stresses.

The support structure supports the auxiliary power unit by means of at least three anchoring points, although a larger number thereof may be used, depending upon the degree of steadiness and secureness desired for the system, as well as upon the weight of the unit and upon the vibrations given off thereby. The auxiliary power unit is supported at the top and side thereof, being hung from the support structure. The advantage of this manner of attachment is that it provides for ready access to the unit without the elements of the support structure becoming a hindrance, and the unit can additionally be freed and detached from the support structure, facilitating its being taken down when necessary to repair it out of the assembly or rather to replace it with a new one.

In one particular embodiment, the frame of the auxiliary power unit support structure is comprised of bars and ribs which can be attached to one another in an articulated manner, fixed or semifixed, for which purpose means of welding, adhesive, rivets, bolts, lugs and similar attaching elements may be used. In addition thereto, said bars and ribs can be comprised of one single element or ban be formed by joining different parts to one another. Elastomeric elements are used as vibration dampers at the anchoring points of the auxiliary power unit. These elastomers may be located directly on the inside of the elements comprising the anchoring points of the auxiliary power unit or at the ends of the bars and ribs of the structure supporting said anchoring points.

Several of the elements comprising the support structure of the auxiliary power unit may be used to support the telescopic rails supporting the longitudinal movement of the movable fairing, which ensures the secure attachment thereof, thus preventing their wear. In turn, the telescopic rail sections can serve to reinforce the support structure of the auxiliary power unit, providing the auxiliary power unit with greater sturdiness and rigidity.

In the different embodiments of the invention, both the exhaust pipe and the air intake of the auxiliary power unit are supported by the support structure independently from each power unit. The exhaust pipe is secured by means of conventional fasteners, such as connecting rods, lugs, metal fitting or similar means of attachment; and the air intake is secured either on the support structure or rather on the fixed forward section, or on both, also by means of conventional fasteners.

All of these elements comprise an integrated assembly, the tail cone, which is attached to the rest of the fuselage by means of metal attachment fittings arranged on the forward ring-frame of the fixed forward section and supplementary fittings arranged on the closing ring-frame of the rest of the fuselage. These metal attachment fittings are usually arranged in the same positions in which the metal attachment fittings joining the support structure to the fixed forward section are located.

### BRIEF DESCRIPTION OF THE FIGURES

For a better comprehension of this description and comprising an integral part thereof, some drawings are provided in following on which, for illustrative and nonlimiting purposes, the object of the invention has been shown in one of the different embodiments thereof.
Figure 1 is a view of an aircraft showing the location of the rear fuselage.
Figure 2 is a view of the rear fuselage shown in Figure 1, showing the location of the tail cone.
Figure 3 is a schematic view of the tail cone attached to the rest of the fuselage, showing the auxiliary power unit and the ancillary elements thereof on the interior thereof.
Figure 4 is a schematic view of one embodiment of the invention showing the tail cone cover and the support structure for the auxiliary power unit and the ancillary elements thereof.
Figure 5 is a profile view of the embodiment shown in Figure 4 in which movable fairing is in the open position, allowing access to the auxiliary power unit and the ancillary elements thereof.
Figure 6 is a profile view of the embodiment shown in Figure 4 in which movable fairing is in the closed position and covers the auxiliary power unit and the ancillary elements thereof.
Figure 7 is a profile view of an alternative embodiment of the invention, with the central part of the tail cone cover being movable and the end part of the cover fixed to the moving part, being in the open position and allowing access to the auxiliary power unit and the ancillary elements thereof.
Figure 8 is a profile view of the embodiment shown in Figure 7, in which the moving part is in the closed position, covering the auxiliary power unit and the ancillary elements thereof.
Figure 9 shows an embodiment of the support structure of the auxiliary power unit and the ancillary elements thereof.
Figure 10 shows an alternative embodiment of the support structure of the auxiliary power unit and the ancillary elements thereof.
Figure 11 is a view of the embodiment shown in Figure 4 showing the assembly of the invention with the fixed element, the movable fairing in closed position, the rails and the support structure of the auxiliary power unit and the ancillary elements thereof.
Figure 12 is a view similar to Figure 10, except that in this case the movable fairing is in the open position.
Figure 13 shows a detail of the system of supports for the rails on the ring-frames of the fixed forward section and the intermediate supports of these rails on the support structure.
Figure 14 shows the relative position and the attachment of the movable fairing and the rails.
Figure 15 is a view of an embodiment of the fixed forward section of the tail cone cover showing the two ring-frames, the cover panel between the two and the rigidizing elements.
Figure 16 is an overview of the assembly of the invention showing the position of the attachment points of the movable fairing to the fixed forward section of the tail cone.
Figure 17 shows the details of an embodiment of the attachment points of the movable fairing to the fixed forward section of the tail cone, in the closed position at the top and in the bottom.
Figure 18 is a schematic view showing the attachment points of the support structure of the auxiliary power unit and the ancillary elements thereof to the fixed forward section of the tail cone.
Figure 19 shows a particular embodiment of the metal attachment fittings of the support structure to the fixed forward section of the tail cone as well as of the attachment elements of said tail cone to the rest of the fuselage.
Figure 20 shows an alternative embodiment of the metal attachment fittings of the support structure to the fixed forward section of the tail cone, in conjunction with the attachment elements of said tail cone to the rest of the fuselage shown in the immediately preceding figure.
Figure 21 is a front view of the attachment points of the tail cone and the rest of the fuselage on the closing ring-frame for the rest of the fuselage.
Figure 22 is a front view of the attachment points of the tail cone and the rest of the fuselage on the closing ring-frame of the fixed front section of the tail cone.
Figure 23 is a view of the tail cone shown completely separated from the rest of the fuselage, showing the attachment elements of both assemblies.
Figure 24 is a schematic view of an embodiment of the invention in which a longitudinal movement of the movable fairing and a front folding of an additional movable fairing is produced.

Numerical references are included in these figures denoting the following elements:
1. Aircraft
2. Tail cone
3. Auxiliary power unit
4. Rest of the fuselage
5. Firewall bulkhead
6. Air intake of the auxiliary power unit
7. Exhaust pipe of the auxiliary power unit
8. Tail cone cover
9. Movable fairing
10. Support structure of the auxiliary power unit and the ancillary elements thereof
11. Fixed forward section of the tail cone
12. Forward ring-frame of the fixed forward section of the tail cone
13. Aft ring-frame of the fixed forward section of the tail cone
14. Cover panel of the fixed forward section
15. Rigidizing elements
16. Telescopic rails
17. Intermediate supports
18. Closing ring-frame of the movable fairing
19. Attachment anchorings
20. Fixed end fairing of the tail cone cover
21. Metal attachment fittings of the support structure and the fixed forward part of the tail cone
22. Longitudinal elements
23. Transverse elements
24. Forward fasteners of the auxiliary power unit
25. Rear fasteners of the auxiliary power unit
26. Primary fittings on the tail cone
27. Secondary fittings on the rest of the fuselage
28. Fixed section of the telescopic rails
29. Movable sections of the telescopic rails
30. Half ring-frames for supporting the telescopic rails
31. Metal attachment fittings for rails and supporting half ring-frames
32. Closing ring frame for the rest of the fuselage
33. Exhaust pipe fasteners
34. Means of attachment for the support structure elements
35. Rear fuselage
36. Additional movable fairing
37. Means of articulation
38. Additional means of articulation
39. Primary lateral movable fairing
40. Secondary lateral movable fairing
41. Upper fixed element
42. Primary lateral means of articulation
43. Secondary lateral means of articulation

### EMBODIMENTS OF THE INVENTION

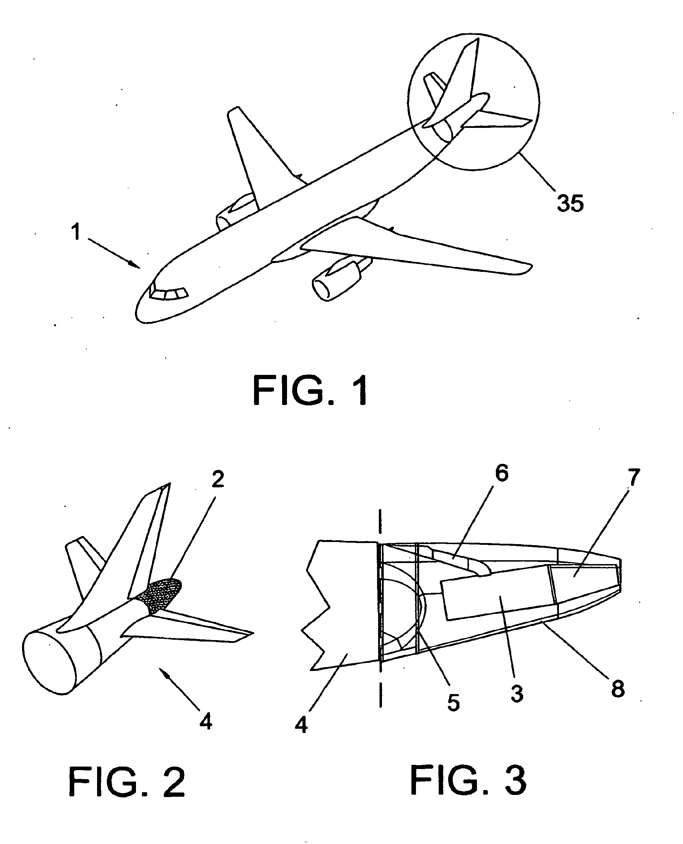

Figures 1 and 2 show an overview of the arrangement of the tail cone 2 on the rear fuselage 35 of an aircraft 1. On said tail cone, the auxiliary power unit 3 and the ancillary elements thereof such as the air intake 6 and the exhaust pipe 7 are located. Figure 3 shows a conventional embodiment of said tail cone 2 on which a firewall bulkhead 5 safeguards the rest of the fuselage 4 against possible risks of fire.

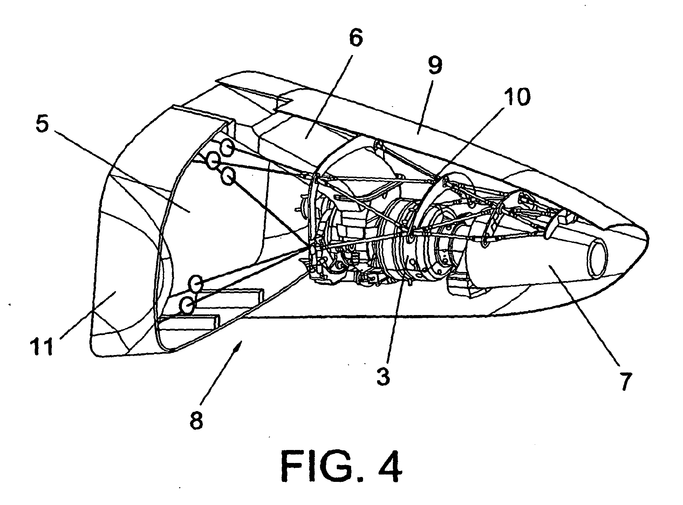

Figure 4 shows an embodiment of the tail cone 2 comprising the object of the invention. The tail cone 2 comprises a cover 8 which houses an auxiliary power unit 3 and an assembly of systems ancillary thereto, such as an air intake 6 and an exhaust pipe 7. The cover of the tail cone 2 is comprised of a fixed forward section 11 and a movable fairing 9.

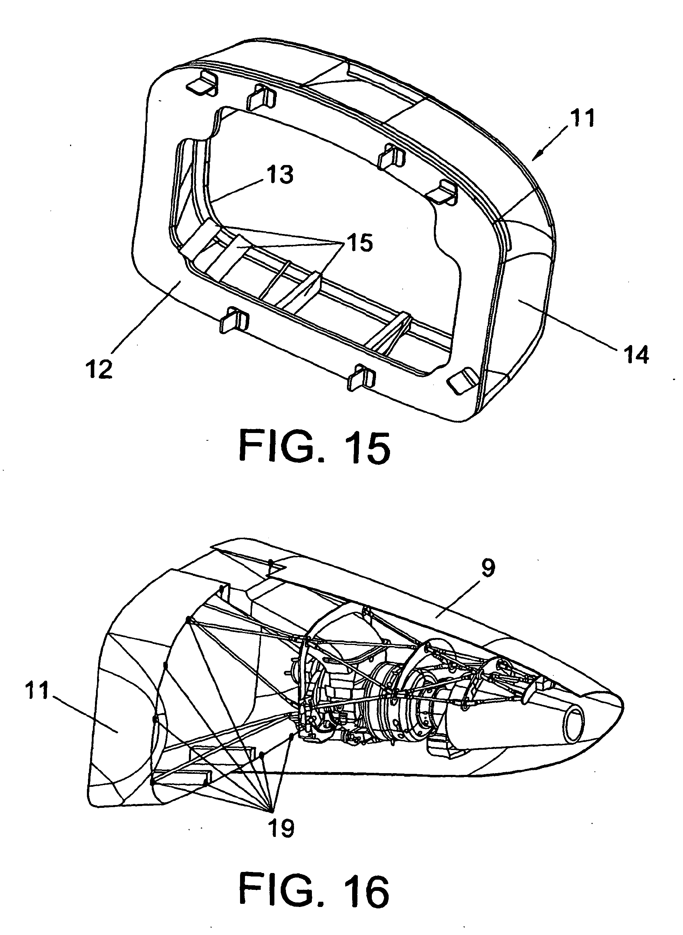

The fixed forward section 11 joins the tail cone 2 to the rest of the fuselage 4, and as is shown in Figure 15, in a particular embodiment of said fixed forward section 11, said section is comprised of a forward ring-frame 12 and a aft ring-frame 13, and a cover panel 14 positioned between the two ring-frames, in conjunction with rigidizing elements 15. This embodiment of the fixed forward section 11 provides said section with the necessary rigidity and sturdiness yet without adding too much to the weight of the aircraft 1. In a preferred embodiment of the fixed forward section 11, said section is perpendicular to the longitudinal axis of the aircraft 1, although it may also be embodied at a different slant from the longitudinal axis.

The cover 8 houses a support structure 10 which serves to support the auxiliary power unit 3 and the ancillary elements thereof.

In one particular embodiment of the invention, this support structure 10 is comprised of an assembly of longitudinal 22 and transverse 23 elements. These longitudinal 22 and transverse 23 elements are made of material resistant to high temperatures due to the high temperatures which the auxiliary power unit reaches and the risk of the same catching on fire.

One of the main characteristics of the invention is the movable fairing 9, which makes it possible to close and open the cover 8 of the tail cone 2 and allows access to the auxiliary power unit 3 for the maintenance, repair or replacement thereof.

According to the invention, the movable fairing 9 moves longitudinally from a closed position in which said movable fairing 9 is attached to the fixed forward section 11 and the cover 8 remains closed such that it houses the support structure 10 with the auxiliary power unit 3 inside, and an open position in which the movable fairing 9 separates from the fixed forward section 11 and the cover 8 remains open leaving the support structure with the auxiliary power unit 3 and the ancillary elements thereof exposed, allowing any operator fast, easy access for the inspection, maintenance or repair of said auxiliary power unit 3.

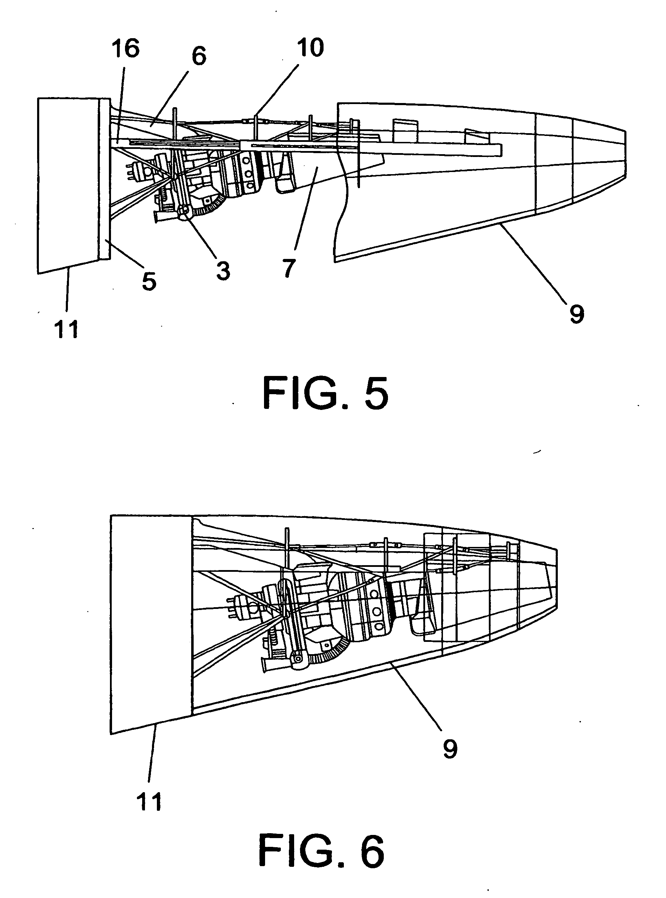

Figure 5 shows this embodiment of the invention by way of longitudinal movement of the movable fairing 9, in which the cover 8 of the tail cone 2 is in the open position, it being shown that the support structure 10 and the auxiliary power unit 3 are exposed and readily accessible for the handling thereof. Complementarily, Figure 6 shows the cover 8 of the tail cone 2 comprising the object of the invention in the closed position, where, for purposes of clarity, the movable fairing 9 has been drawn transparently in order to show that the support structure 10 with the auxiliary power unit are thus located inside.

Therefore, this embodiment of the tail cone 2 by way of a movable fairing 9, provides a system for easily removing the cover 8 from said tail cone 2 and facilitating access to the auxiliary power unit 3 for the inspection, maintenance and repair thereof, whilst the support structure 10 also provides a simple, safe system for supporting the auxiliary power unit 3, which is necessary with this configuration, given that the movable fairing 9 no longer serves to structurally support the auxiliary power unit 3, a suitable support being needed for said auxiliary power unit, the system overall therefore serving this twofold purpose of supporting the auxiliary power unit 3 and of mobility to facilitate access to the auxiliary power unit for maintenance and repair tasks.

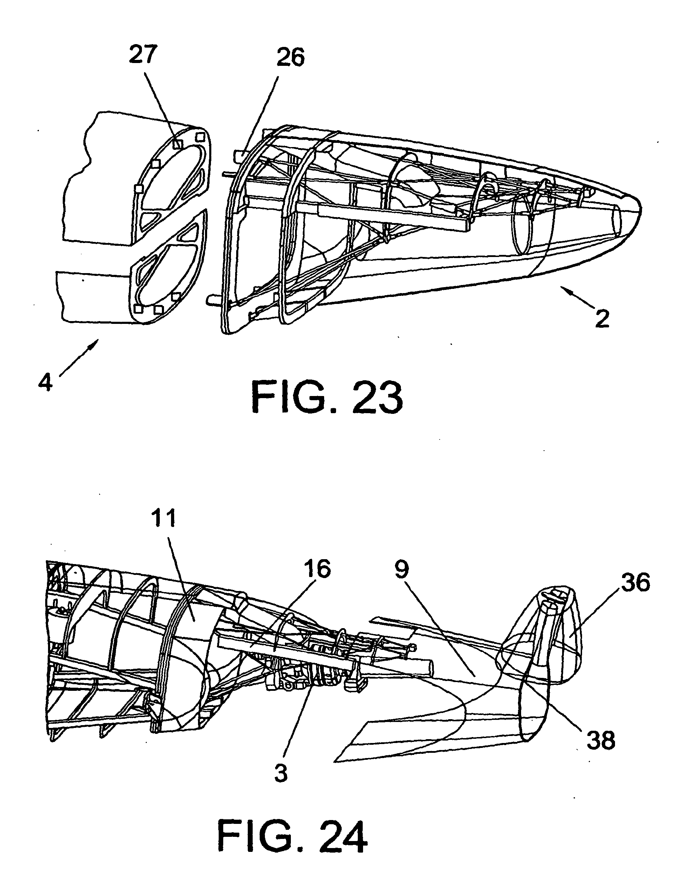

Figure 24 shows an alternative embodiment of the invention with longitudinal movement of the movable fairing 9, in which a folding of an additional movable fairing 36 attached to the movable fairing 9 by way of additional means of articulation 38 define a horizontal turning axis perpendicular to the longitudinal axis of the aircraft 1, and the additional movable fairing .36 turns on said turning axis leaving the support structure 10 and the auxiliary power unit 3 and the ancillary elements thereof 6,7 exposed at the rear of the tail cone 2.

Likewise, according to other embodiments of the invention, the additional movable fairing 36 can be folding according to a turning axis parallel to the longitudinal axis of the aircraft 1, or even folding according to a turning axis in any direction.

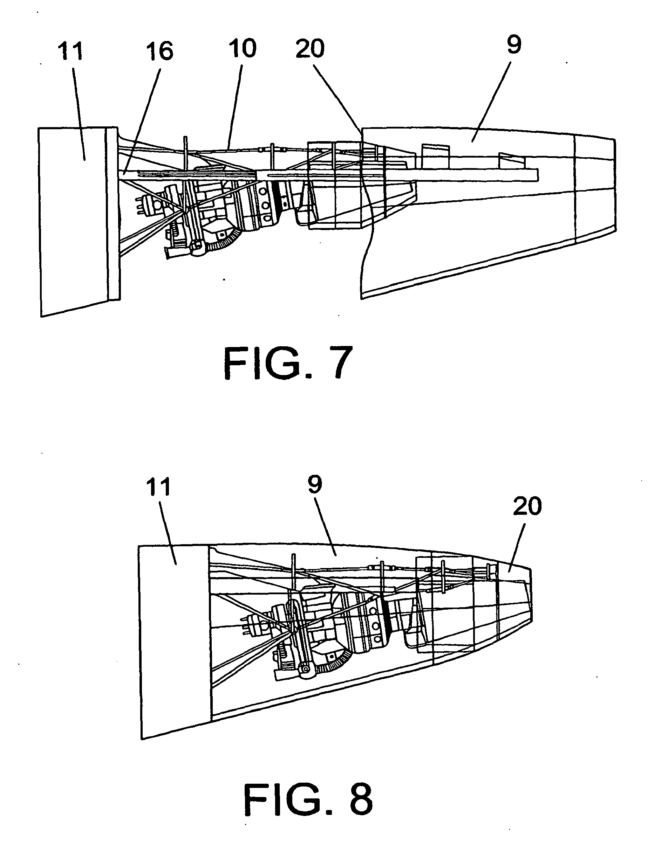

Figures 7 and 8 show another alternative embodiment of the invention with longitudinal movement of the movable fairing 9, in which a fixed end fairing 20 is added to the cover 8 at the rear thereof, directly beyond the movable fairing 9. This fixed end fairing 20 surrounds the exhaust pipe 7 and is locked thereto, remaining permanently fixed. By way of this embodiment, the movable fairing 9, as shown in Figure 8, when in its closed position remains between the fixed forward section 11 and the fixed end fairing 20 and in contact with both thereof. Said movable fairing 9, in its longitudinal movement along the longitudinal axis of the aircraft 1, separates from the fixed section 11 and leaves the fixed end fairing 20 on the interior thereof, moving past the same and reaching the open position, which is shown in Figure 7, leaving the support structure 10 with the auxiliary power unit 3 and the ancillary elements thereof exposed for allow access thereto.

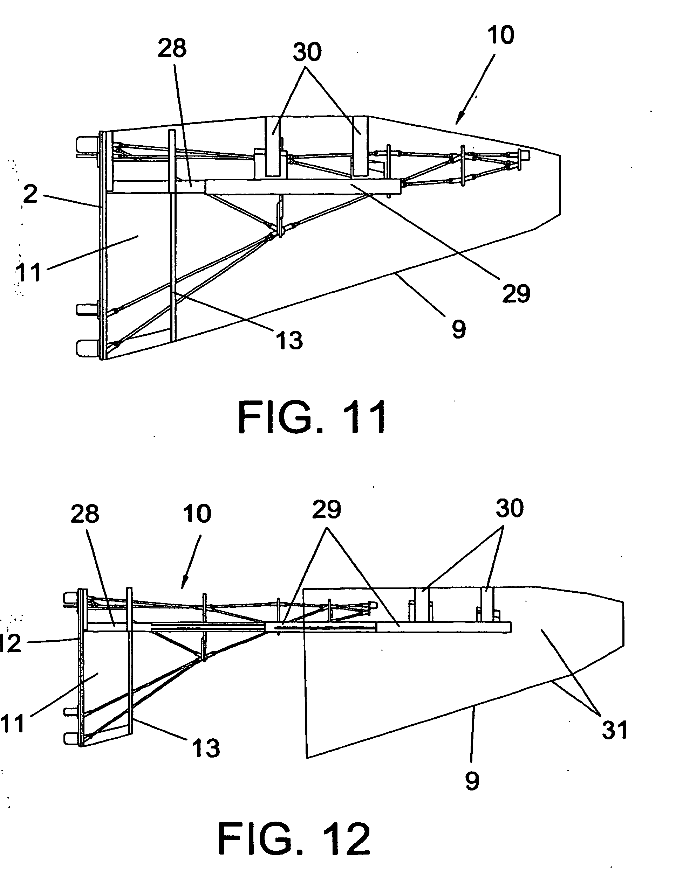

Each one of the telescopic rails 16 is comprised of a fixed section 28 which is that which is secured to the fixed forward section 11, and a number of movable sections 29 attached to the movable fairing 9, which, in their movement, cause the movement of said movable fairing 9. This embodiment provides the advantage of it being made possible to remove the cover 8 for accessing the auxiliary power unit 3 by way of a simple, gentle movement. Figure 11 shows both sections 28, 29 and the cover 8 in the closed position. Figure 12 shows the sections 29 extended and the cover 8 in the open position.

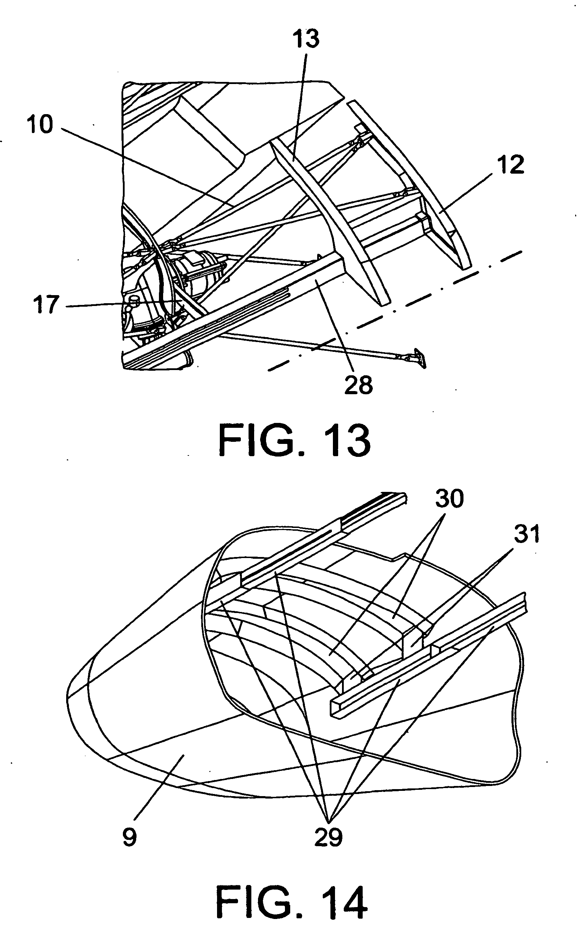

Figure 13 shows the way in which the fixed section 28 of the telescopic rails 16 is attached to the fixed forward section 11 of the cover 8 of the tail cone 2. For the purpose of achieving a high degree of safety and stability, the fixed section 28 is secured to the forward ring-frame 12 and to the rear ring frame 13 of said fixed forward section 11. Figure 14 shows the attachment of the movable sections 29 of the telescopic rails 16 to the movable fairing 9. As is shown in said Figure 14, the movable fairing 9 is has a number of ring frames or half ring-frames 30 on the inside thereof, which in addition to serving the purpose of providing said movable fairing 9 with rigidity, are used for securing the movable sections 29 of the telescopic rails by way of metal attachment fittings 31 arranged on said movable sections.

In order to achieve the necessary rigidity in the movable fairing 9, in addition to the half ring-frames 30, the movable fairing 9 comprises additional reinforcement elements such as ring frames or stringers. Another alternative way of achieving this added reinforcement is by way of a sandwich type cover which directly provides the necessary rigidity. Thus a certain degree of rigidity and sturdiness is provided without greatly adding to the weight of the assembly.

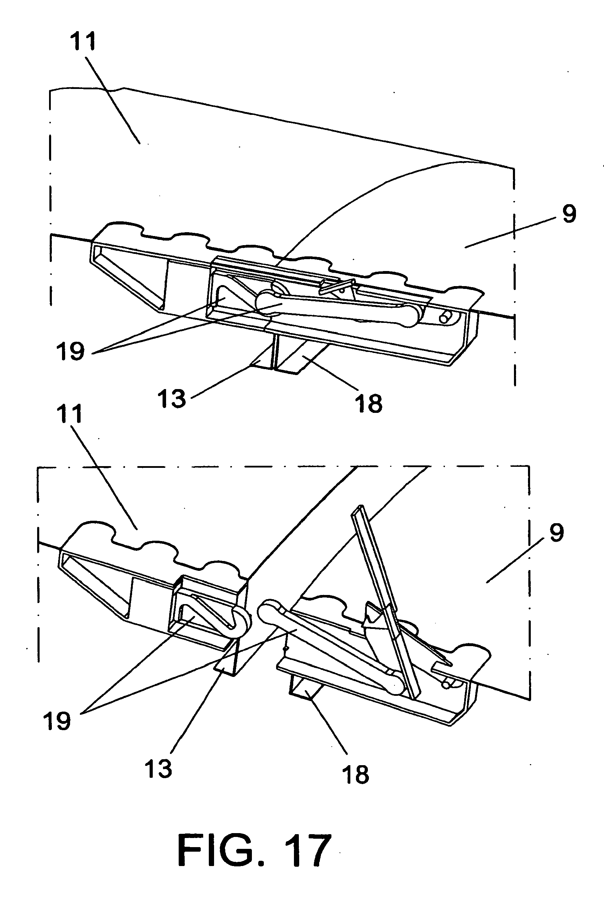

In the preferred embodiments of the invention, in which there is a longitudinal movement of the movable fairing 9, in the closed position, the attachment of the movable fairing 9 to the fixed forward section 11 is made by means of a closing ring frame 18 of the movable fairing which is secured to the aft ring-frame 13 of the fixed forward section by means of conventional attachment anchorings 19, as is shown in Figure 16, which are actuated fast and simply, which makes the longitudinal movement of the movable fairing 9 and the opening of the cover 8 of the tail cone 2 possible. Figure 17 shows an example of the embodiment of said conventional attachment anchorings in the closed and open positions.

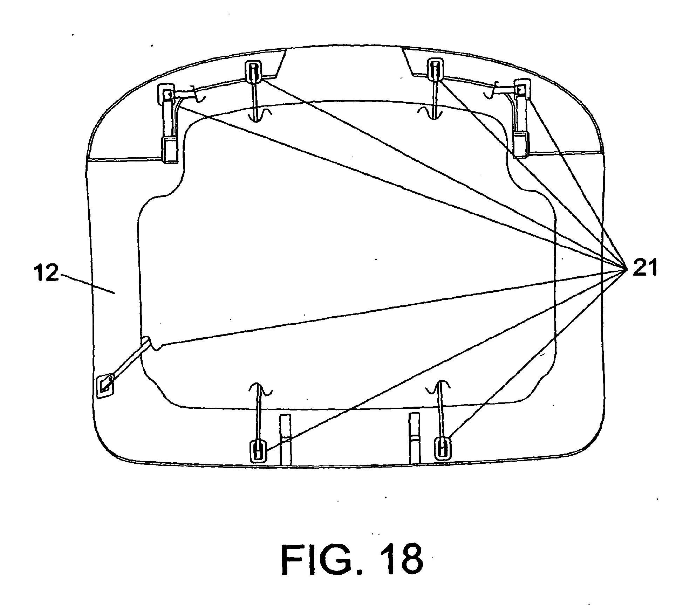

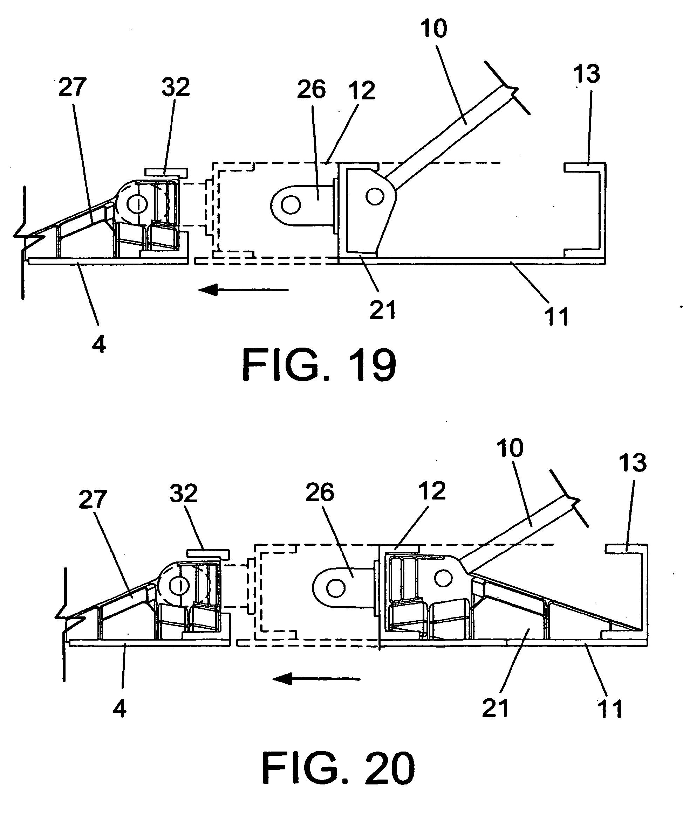

Regarding the support structure 10, which supports the auxiliary power unit 3 and the ancillary elements thereof, said structure is secured to the fixed forward section 11 by means of a set of metal attachment fittings 21, as is schematically diagrammed in Figure 18. In this case, and also shown in Figure 19, the support structure 10 is secured directly to the forward ring-frame 12 of said fixed forward section 11.

Figure 20 shows an alternative embodiment of the attachment of the support structure 10 to the fixed forward section 11, in which said support structure 10 is attached between the forward ring-frame 12 and the aft ring-frame 13 of the forward section by means of the metal attachment fittings 21. This second embodiment of the attachment provides for a firmer anchoring thanks to the fitting placed between two ring-frames.

In another additional embodiment of the attachment of the support structure 10, said structure is attached to the aft ring-frame 13 of the fixed forward section 11 by means of conventional metal attachment fittings 21, there being counter-fittings between the forward ring-frame 12 and the aft ring-frame 13 to safely transmit the stresses.

Thus, the support structure 10 is attached to the tail cone 2 in a totally secure manner and can serve the purpose of supporting the auxiliary power unit 3 and the ancillary elements thereof.

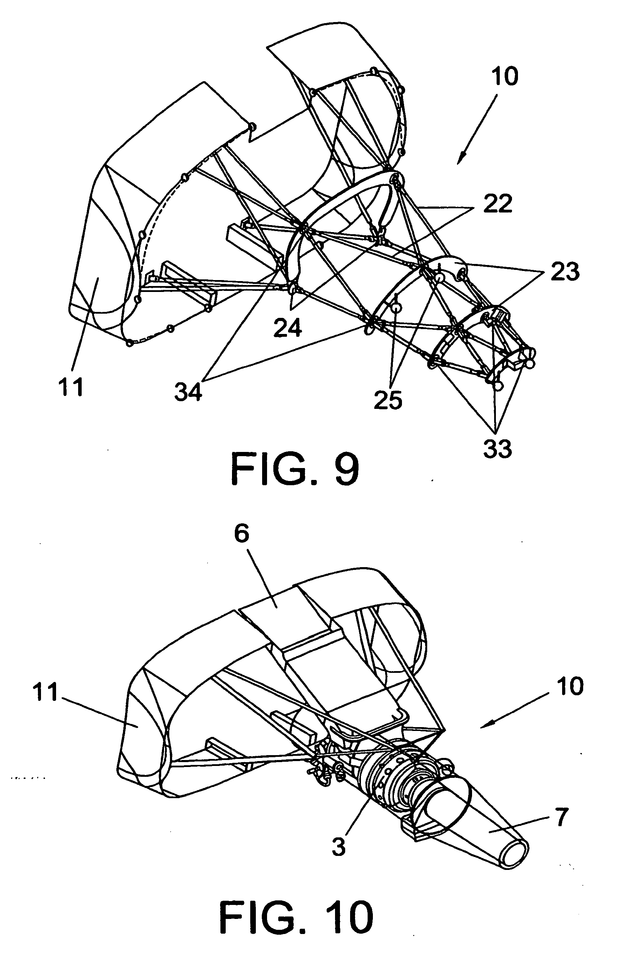

The support structure 10 supports the auxiliary power unit 3 by the upper part and the sides the same, by means of at least three anchoring points on the forward fasteners 24 and rear fasteners 25 of said auxiliary power unit 3, although more anchoring points could be used, depending upon the size of the unit, as well as on the weight and the vibrations caused, and on the desired degree of steadiness and secureness. The advantage provided by this embodiment is the secureness of the support as the same time as a ready accessibility to the auxiliary power unit 3 when it is necessary to handle this unit, given that, on being fastened by its upper and side part, the operators will have free access and will not be hindered by the support unit 10 proper. Additionally, this configuration facilitates the task of easily taking down and removing the unit when it is necessary to repair it out of the assembly or rather to replace it with another. Figure 9 details all of the elements which provide the securing into place of the auxiliary power unit 3.

As is shown in said Figure 9, in a preferred embodiment of the support structure 10, the longitudinal elements 22 are bars, and the transverse elements 23 are ribs, which approximately adapt to the upper shape of the auxiliary power unit and enclose the same, thus facilitating the securing thereof.

Figure 10 shows an alternative embodiment of the support structure 10 in which both the longitudinal 22 as well as the transverse 23 elements are bars.

The attachment of these elements 22, 23 which comprise the framing constituting the support structure 10 can be made by way of conventional means such as welding, adhesive, rivets, lugs, bolts or similar means of attachment. By way of these means of attachment 34, different attachments are achieved, some being fixed without any leeway of movement, others semifixed and others articulated for the purpose of absorbing stresses and strains transmitted by the auxiliary power unit 3. Likewise, in different embodiments of the support structure 10, each one of the elements 22, 23 comprising the same can be made either in one single piece, which will provide the assembly with simplicity and sturdiness, or rather can be made by joining together different parts, which will facilitate maintenance and replacement of worn or damaged elements 22, 23 of the support structure 10.

The functioning of the auxiliary power unit 3 produces vibrations, and these vibrations are transmitted to the support structure 10, and through the same to the fixed forward section 11 of the tail cone 2. In order to prevent damage by way of wear and fatigue due to the vibrations, the embodiment of the invention takes in including elastomeric elements as dampers of the vibrations at the anchoring points of the auxiliary power unit 3. These elastomers may be located directly on the inside of the elements forming the anchoring points of the auxiliary power unit 3 or on the ends of the bars and ribs of the support structure 10 which support said anchoring points.

This support structure 10, in addition to serving the purpose of supporting the auxiliary power unit 3 and the ancillary elements thereof 6, 7, is used as a support for the telescopic rails 9 and the opening and closing of the cover 8 of the tail cone 2, as shown in Figure 13. Thus, the telescopic rails do not undergo wear due to the weight of the movable fairing 9, a greater degree of stability and a lesser degree of vibration in the movement of said movable fairing 9 thus being achieved. In turn, the sections of telescopic rails 16 can serve to reinforce the support structure 10 of the auxiliary power unit 3 by providing a greater degree of rigidity and strength of the same.

The exhaust pipe is secured in place by means of conventional fasteners such as pin, lugs, metal fittings or similar means of attachment, and the air intake is secured either on the support structure or on the fixed forward section, or on both, also by means of conventional fasteners.

As previously stated hereinabove, in addition to supporting the auxiliary power unit 3, this support structure 10 supports the exhaust pipe 7 and the air intake 6 attached to the same and necessary for the proper functioning thereof. In a preferred embodiment, the exhaust pipe 7 is supported by the support structure 10 independently from the auxiliary power unit 3 by means of conventional exhaust pipe 37 fasteners such as lugs, pins or similar means of attachment. Additionally, the air intake is supported independently from the auxiliary power unit 3, either on the support structure 10 or on the fixed forward section 11 of the fail cone 2 or on both, also by means of conventional fasteners. This embodiment facilitates the maintenance, repair or even replacement of any of these ancillary elements at any point in time independently of the auxiliary power unit 3. Moreover, due to the independent fasteners of these elements with the support structure 10, it is made possible for no internal strains due to the heat expansion of the auxiliary power unit 3 and the ancillary elements thereof 6,7 to be generated.

All of the elements described hereinabove, integrated into one sole assembly, form the tail cone 2, independent from the rest of the fuselage 4, to which it can be attached once said tail one 2 is fully mounted.

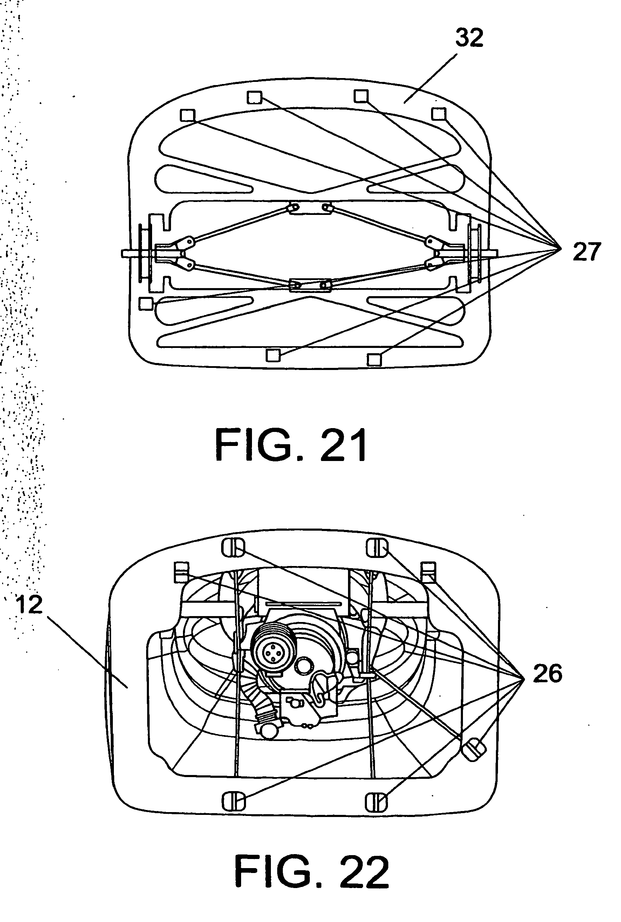

For said attachment, the rest of the fuselage has a closing ring-frame 32 at the rear thereof to which the forward ring-frame 12 of the fixed forward section of the tail cone 2 will be attached. For this purpose, the forward ring-frame 12 has some primary metal fittings 26 and the closing ring-frame 32 has some secondary fittings 27 supplementary to the primary fittings 26, the set of fittings 26, 27 providing a simple, effective attachment. Figures 21 and 22 show the primary fittings 26 of the forward ring-frame of the fixed forward section 11 and the secondary fittings of the closing ring-frame 32 of the rest of the fuselage 4, and Figure 23 generally shows the attachment of the tail cone 2 to the rest of the fuselage 4 by means of the fittings 26, 27.

The primary fittings 26 may additionally comprise counter-fittings for the purpose of transmitting the stresses received to the fixed forward section 11 of the tail cone 2, and the secondary fittings 27 may additionally comprise counter-fittings for the purpose of transmitting the stresses received, in this case, to the rest of the fuselage 4.

In a preferred embodiment of the invention, the positions of the primary metal attachment fittings 26 existing on the forward ring-frame 12 of the fixed forward section 11 for attaching the tail cone 2 to the rest of the fuselage 4 coincide with the positions of the metal attachment fittings 21 of the fixed forward section 11 for attaching the support structure 10 to said fixed forward section 11.

Another embodiment of the attachment between the rest of the fuselage 4 and the tail cone 2 consists of a continuous circumferential attachment which directly attaches the covers of the tail cone 2 to the covers of the rest of the fuselage 4, adding the reinforcement elements necessary to achieve the necessary firmness for said attachment.

## Claims

1. Tail cone for aircraft (1), which comprises a cover (8) which houses an auxiliary power unit (3) and an assembly of ancillary systems comprising an air intake (6) and an exhaust pipe (7), the cover (8) of said tail cone (2) comprises a fixed forward section (11) by means of which the tail cone (2) is attachable to the rest of the fuselage (4), and a movable fairing (9), said cover (8) housing a support structure (10) comprised of a set of elements and secured to the fixed forward section (11), said support structure (10) supporting the auxiliary power unit (3) and the ancillary elements thereof (6,7), the movable fairing (9) moving between a closed position in which said movable fairing (9) is attached to the fixed forward section (11) and the cover (8) remains closed housing on the interior thereof the support structure (10) and the auxiliary power unit (3) and the ancillary elements thereof (6,7), and an open position in which the cover (8) remains open leaving the support structure (10) and the auxiliary power unit (3) and the ancillary elements thereof (6,7) exposed and allowing access to the same, the tail cone (2) being **characterized in that** the movable fairing (9) moves longitudinally by means of telescopic rails (16) secured to the fixed forward section (11), said telescopic rails (16) being arranged longitudinally of the aircraft (1), between the closed position in which said movable fairing (9) is attached to the fixed forward section (11) and the cover (8) remains closed housing on the inside thereof the support structure (10), the auxiliary power unit (3) and the ancillary elements thereof (6, 7), and the open position in which said movable fairing (9) is separated from the fixed forward section (11) and the cover (8) remains open leaving the support structure (10) and the auxiliary power unit (3) and the ancillary elements thereof (6,7) exposed and allowing access to the same.

2. Tail cone for aircraft (1), according to Claim 1, **characterized in that** the fixed forward section (11) comprises a forward ring-frame (12) and an aft ring-frame (13), and a cover panel (14) and rigidizing elements (15) between the forward ring-frame (12) and the aft ring-frame (13).

3. Tail cone for aircraft (1), according to any of the preceding Claims, **characterized in that** the cover (8) comprises, at the rear end thereof, a folding additional movable fairing (36), said additional movable fairing (36) attached to the movable fairing (9) by way of additional means of articulation (38) which comprise a turning axis, the additional movable fairing (36) turning around the turning axis of the additional means of articulation (38) leaving the support structure (10) and the auxiliary power unit (3) and the ancillary elements thereof (6, 7) exposed at the rear part of the tail cone (2).

4. Tail cone for aircraft (1), according to Claim 3, **characterized in that** the additional movable fairing is front-folding, said additional movable fairing (36) being attached to the movable fairing (9) by way of additional means of articulation (38) which comprise a horizontal turning axis perpendicular to the longitudinal axis of the aircraft (1), the additional movable fairing (36) turning around the horizontal turning axis of the additional means of articulation (38).

5. Tail cone for aircraft (1), according to Claim 1, **characterized in that** the cover (8) of the tail cone (2) comprises at the rear part thereof, a fixed end fairing (20) which surrounds the exhaust pipe (7) of the auxiliary power unit (3) and is locked thereto and remains fixed, being the central part of the cover (8) of the movable fairing (9), said movable fairing (9) moving longitudinally, leaving the fixed end fairing (20) inside thereof, between the closed position in which it remains between the fixed forward section (11) and the fixed end fairing (20) attached to the fixed forward section (11) and the fixed end fairing (20), and the open position which it is separated from the fixed forward section (11) having moved past the fixed end fairing (20) and the cover (8) remains open leaving the support structure (10) and the auxiliary power unit (3) exposed and allowing access to the same.

6. Tail cone for aircraft (1), according to any of Claims 1 to 5, **characterized in that** each one of the telescopic rails (16) comprises a fixed section (28) which is attached directly to the fixed forward section (11), resting on the forward ring-frame (12) and on the aft ring-frame (13) thereof, and a number of sliding movable sections (29), the last of said movable sections (29) being attached to half ring-frames (30) or to complete ring-frames secured to the movable fairing (9) by means of metal attachment fittings (31).

7. Tail cone for aircraft (1), according to any of Claims 2 to 6, **characterized in that** the movable fairing (9) comprises at the end thereof attached to the fixed forward section (11) a closing ring-frame (18) which is secured to the aft ring-frame (13) of said fixed forward section (11) by means of conventional attachment anchorings (19).

8. Tail cone for aircraft (1), according to any of the preceding Claims, **characterized in that** the movable fairing (9) comprises reinforcement elements selected from among ring-frames, half ring-frames, stringers, sandwich type coverings and a combination thereof.

9. Tail cone for aircraft (1), according to any of Claims 2 to 8, **characterized in that** the support structure (10) is attached directly to the forward ring-frame (12) of the fixed forward section (11) by means of metal attachment fittings (21).

10. Tail cone for aircraft (1), according to any of Claims 2 to 8, **characterized in that** the support structure (10) is attached between the forward ring-frame (12) and the aft ring-frame (13) of the fixed forward section (11) by means of metal attachment fittings (21).

11. Tail cone for aircraft (1), according to any of Claims 2 to 8, **characterized in that** the support structure (10) is attached directly to the aft ring-frame (13) of the fixed forward section (11) by means of metal attachment fittings (21).

12. Tail cone for aircraft (1), according to Claim 11, **characterized in that** there are additionally counter-fittings between the forward ring-frame (12) and the aft ring-frame (13) of the fixed forward section (11) which safely transmit the stresses.

13. Tail cone for aircraft (1), according to any of the preceding Claims, **characterized in that** the support structure (10) supports the auxiliary power unit (3) by the upper and lateral part thereof by means of at least three anchoring points on the forward fasteners (24) and rear fasteners (25) of the auxiliary power unit (3).

14. Tail cone for aircraft (1), according to Claim 13, **characterized in that** the anchoring points of the auxiliary power unit (3) to the support structure (10) comprise vibration-damping elements on the interior thereof.

15. Tail cone for aircraft (1), according to any of Claims 1 to 13, **characterized in that** the element comprising the support structure (10) attached to the anchoring points of the auxiliary power unit comprise elastomeric elements at the ends thereof.

16. Tail cone for aircraft (1), according to any of the preceding Claims, **characterized in that** the elements comprising the support structure (10) are attached to one another by way of articulated attachment means (34), means of fixed attachment, means of semifixed attachment and a combination thereof.

17. Tail cone for aircraft (1), according to any of the preceding Claims, **characterized in that** the elements comprising the support structure (10) comprise an assembly of longitudinal elements (22) and an assembly of transverse elements (23).

18. Tail cone for aircraft (1), according to Claim 17, **characterized in that** the longitudinal elements (22) of the support structure (10) are bars, and the transverse elements (23) are ribs.

19. Tail cone for aircraft (1), according to Claim 17, **characterized in that** both the longitudinal elements (22) and the transverse elements (23) are bars.

20. Tail cone for aircraft (1), according to any of the preceding Claims, **characterized in that** the elements comprising the support structure (10) are made in one sole piece.

21. Tail cone for aircraft (1), according to any of Claims 1 to 19, **characterized in that** the elements comprising the support structure (10) are made by means of attaching different parts to one another.

22. Tail cone for aircraft (1), according to any of Claims 1 to 21, **characterized in that** the telescopic rails (16) additionally rest on the support structure (10).

23. Tail cone for aircraft (1), according to any of the preceding Claims, **characterized in that** the exhaust pipe (7) is supported by the support structure (10) independently from the auxiliary power unit (3) by means of conventional fasteners of the exhaust pipe (7).

24. Tail cone for aircraft (1), according to any of the preceding Claims, **characterized in that** the air intake (6) is supported independently from the auxiliary power unit (3), being attached to the support structure (10) by means of conventional fasteners.

25. Tail cone for aircraft (1), according to any of Claims 1 to 23, **characterized in that** the air intake (6) is supported independently from the auxiliary power unit (3), being attached to the fixed forward section (11) by means of conventional fasteners.

26. Tail cone for aircraft (1), according to any of Claims 1 to 23, **characterized in that** the air intake (6) is supported independently from the auxiliary power unit (3), being attached to the support structure (10) and to the fixed forward section (11) by means of conventional fasteners.

27. Tail cone for aircraft (1), according to any of Claims 2 to 26 in combination with the rest of the fuselage (4), **characterized in that** the forward ring-frame (12) of the fixed forward section (11) comprises a number of primary metal attachment fittings (26), and that the rest of the fuselage (4) comprises a closing ring-frame (32) which comprises a number of secondary metal attachment fittings (27), so that the tail cone (2) is attachable to the rest of the fuselage (4) by means of the attachment of the primary metal attachment fittings (26) and the secondary metal attachment fittings (27).

28. Tail cone for aircraft (1), according to Claim 27 in combination with the rest of the fuselage (4), **characterized in that** the primary metal attachment fittings (26) comprise some primary counter-fittings which transmit the stresses received to the fixed forward section (11) of the tail cone (2), and the secondary metal attachment fittings (27) comprises some secondary counter-fittings which transmit the stresses received to the rest of the fuselage (4).

29. Tail cone for aircraft (1), according to either Claim 27 or 28 in combination with the rest of the fuselage (4), **characterized in that** the positions of the primary metal attachment fittings (26) of the forward ring-frame (12) of the fixed forward section (11) coincide with the positions of the metal attachment fittings (21) of the support structure (10) with said fixed forward section (11).

30. Tail cone for aircraft (1), according to any of Claims 1 to 26 in combination with the rest of the fuselage (4), **characterized in that** the attachment between the tail cone (2) and the rest of the fuselage (4) is made by way of continuous circumferential means of attachment which directly attaches the cover (8) of the tail cone (2) to a cover of the rest of the fuselage (4) and means for reinforcing said circumferential means of attachment.

31. Tail cone for aircraft (1), according to any of the preceding Claims, **characterized in that** the fixed forward section (11) additionally comprises a firewall bulkhead (5).

## Patentansprüche

1. Heckkonus für Flugzeug (1), welcher eine Abdeckung (8) umfasst, die ein Hilfstriebwerk (3) und eine Anordnung von Zusatzystemen, die einen Lufteinlass (6) und ein Auspuffrohr (7) umfassen, beinhaltet, wobei die Abdeckung (8) des Heckkonus (2) einen festen vorderen Teil (11), mittels dessen der Heckkonus (2) am Rest des Rumpfes (4) befestigbar ist, und eine bewegliche Verkleidung (9) aufweist, und wobei die Abdeckung (2) eine Stützkonstruktion (10) beinhaltet, die aus einer Gruppe von Elementen besteht und an dem festen vorderen Teil (11) befestigt ist, wobei die Stützkonstruktion (10) das Hilfstriebwerk (3) und die Zusatzelemente davon (6, 7) stützt, wobei sich die bewegliche Verkleidung (9) zwischen einer geschlossenen Postition, in der die bewegliche Verkleidung (9) am festen vorderen Teil (11) befestigt ist und die Abdeckung (8) geschlossen bleibt, wobei sie an der Innenseite davon die Stützkonstruktion (10) und das Hilfstriebwerk (3) und die Zusatzelemente davon (6, 7) beinhaltet, und einer offenen Position bewegt, in welcher die Abdeckung (8) offen bleibt, wobei sie die Stützkonstruktion (10) und das Hilfstriebwerk (3) und die Zusatzelemente davon (6, 7) freilegt und Zugang zu denselben gewährt, wobei der Heckkonus (2) **dadurch gekennzeichnet ist, dass** sich die bewegliche Verkleidung (9) mittels Teleskopschienen (16), die am festen vorderen Teil (11) befestigt sind, in Längsrichtung bewegt, wobei die Teleskopschienen (16) längs am Flugzeug (1) angeordnet sind, zwischen der geschlossenen Position, in welcher die bewegliche Verkleidung (9) am festen vorderen Teil (11) befestigt ist und die Abdeckung (8) geschlossen bleibt, wobei sie an der Innenseite davon die Stützkonstruktion (10), das Hilfstriebwerk (3) und die Zusatzelemente davon (6, 7) beinhaltet, und der offenen Position, in welcher die bewegliche Verkleidung (9) vom festen vorderen Teil (11) betrennt ist und die Abdeckung (8) offen bleibt, wobei sie die Stützkonstruktion (10) und das Hilfstriebwerk (3) und die Zusatzelemente davon (6, 7) freilegt und Zugang zu denselben gewährt.

2. Heckkonus für Flugzeug (1) nach Anspruch 1, **dadurch gekennzeichnet, dass** der feste vordere Teil (11) einen vorderen Ringrahmen (12) und einen hinteren Ringrahmen (13) aufweist, und eine Abdeckplatte (14) und versteifende Elemente (15) zwischen dem vorderen Ringrahmen (12) und dem hinteren Ringrahmen (13).

3. Heckkonus für Flugzeug (1) nach einem der vorhergehenden Ansprüche, **dadurch gekennzeichnet, dass** die Abdeckung (8) an ihrem hinteren Ende eine faltbare zusätzliche bewegliche Verkleidung (36) umfasst, wobei die zusätzliche bewegliche Verkleidung (36) mittels zusätzlicher Gelenkmittel (38), welche eine Drehachse umfassen, an der beweglichen Verkleidung (9) befestigt ist, wobei sich die zusätzliche bewegliche Verkleidung (36) um die Drehachse der zusätzliche Gelenkemittel (38) dreht, wobei sie die Stützkonstruktion (10) und das Hilfstriebwerk (3) und die Zusatzelemente davon (6, 7) am hinteren Teil des Heckkonus (2) freilegt.

4. Heckkonus für Flugzeug (1) nach Anspruch 3, **dadurch gekennzeichnet, dass** die zusätzliche bewegliche Verkleidung nach vorne faltbar ist, wobei die zusätzliche bewegliche Verkleidung (36) mittels zusätzlicher Gelenkmittel (38), welche eine horizontales Drehachse umfassen, die rechtwinkelig zur Längsachse des Flugzeugs (1) ist, an der beweglichen Verkleidung (9) befestigt ist, wobei sich die zusätzliche bewegliche Verkleidung (36) um die horizontale Drehachse der zusätzlichen Gelenkmittel (38) dreht.

5. Heckkonus für Flugzeug (1) nach Anspruch 1, **dadurch gekennzeichnet, dass** die Abdeckung (8) des Heckkonus (2) am hinteren Teil davon eine feste Endverkleidung (20) umfasst, welche das Auspuffrohr (7) des Hilfstriebwerks (3) umgibt und daran angeschlossen ist und fixiert bleibt, wobei es den zentralen Teil der Abdeckung (8) der beweglichen Verkleidung (9) darstellt, und wobei sich die bewegliche Verkleidung (9) in Längsrichtung bewegt, wobei sie die feste Endverkleidung (20) innen davon lässt, zwischen der geschlossene Position, in der sie zwischen dem festen Vorderteil (11) und der festen Endverkleidung (20), befestigt an dem festen Vorderteil (71) und der festen Endverkleidung (20), bleibt, und der offenen Position, in der sie von dem festen Vorderteil (11) getrennt ist und sich über die feste Endverkleidung (20) hinweg bewegt hat und die Abdeckung (8) offen bleibt, wobei sie die Stützkonstruktion (10) und das Hilfstriebwerk (3) freilegt und Zugang zu denselben gewährt.

6. Heckkonus für Flugzeug (1) nach einem der Ansprüche 1 bis 5, **dadurch gekennzeichnet, dass** jede der Teleskopschienen (16) einen festen Teil (28), der direkt am festen Vorderteil (11) befestigt ist und am vorderen Ringrahmen (12) und hinteren Ringrahmen (13) davon ruht, und eine Anzahl von gleitenden beweglichen Teilen (29) umfasst, wobei der letzte der beweglichen Teile (29) an halben Ringrahmen (30) oder vollständigen Ringrahmen angebracht ist, die mittels metallener Befestigungsvorrichtungen (31) an der beweglichen Verkleidung (9) befestigt sind.

7. Heckkonus für Flugzeug (1) nach einem der Ansprüche 2 bis 6, **dadurch gekennzeichnet, dass** die bewegliche Verkleidung (9) an ihrem Ende am festen Vorderteil (11) befestigt einen Verschluss-Ringrahmen (18) umfasst, welcher mittels konventioneller Befestigungsverankerungen (19) am hinteren Ringrahmen (13) des festen Vorderteils (11) befestigt ist.

8. Heckkonus für Flugzeug (1) nach einem der vorhergehenden Ansprüche, **dadurch gekennzeichnet, dass** die bewegliche Verkleidung (9) Verstärkungselemente umfasst, die aus Ringrahmen, halben Ringrahmen, Stringern, sandwichartigen Abdeckungen und einer Kombination davon ausgewählt sind.

9. Heckkonus für Flugzeug (1) nach einem der Ansprüche 2 bis 8, **dadurch gekennzeichnet, dass** die Stützkonstruktion (10) mittels metallener Befestigungsvorrichtungen (21) direkt am vorderen Ringrahmem (12) des festen Vorderteils (11) befestigt ist.

10. Heckkonus für Flugzeug (1) nach einem der Ansprüche 2 bis 8, **dadurch gekennzeichnet, dass** die Stützkonstruktion (10) mittels metallener Befestigungsvorrichtungen (21) zwischen dem vorderen Ringrahmen (12) und dem hinteren Ringrahmen (13) des festen Vorderteils (11) befestigt ist.

11. Heckkonus für Flugzeug (1) nach einem der Ansprüche 2 bis 8, **dadurch gekennzeichnet, dass** die Stützkonstruktion (10) mittels metallener Befestigungsvorrichtungen (21) direkt am hinteren Ringrahmen (13) des festen Vorderteils (11) befestigt ist.

12. Heckkonus für Flugzeug (1) nach Anspruch 11, **dadurch gekennzeichnet, dass** zwischen dem vorderen Ringrahmen (12) und dem hinteren Ringrahmen (13) des festen Vorderteils (11) zusätzliche Gegenbefestigungen vorhanden sind, welche die Belastungen sicher weiterleiten.

13. Heckkonus für Flugzeug (1) nach einem der vorhergehenden Ansprüche, **dadurch gekennzeichnet, dass** die Stützkonstruktion (10) das Hilfstriebwerk (3) am oberen und seitlichen Teil davon mittels zumindest drei Verankerungspunkten an den vorderen Befestigungen (24) und hinteren Befestigungen (25) des Hilfstriebwerks (3) stützt.

14. Heckkonus für Flugzeug (1) nach Anspruch 13, **dadurch gekennzeichnet, dass** die Verankerungspunkte des Hilfstriebwerks (3) zur Stützkonstruktion (10) am Innenteil davon schwingungsdämpfende Elemente umfassen.

15. Heckkonus für Flugzeug (1) nach einem der Ansprüche 1 bis 13, **dadurch gekennzeichnet, dass** die Elemente, aus denen sich die Stützkonstruktion (10), die an den Verankerungspunkten des Hilfstriebwerks befestigt ist, zusammensetzt, an den Enden davon elastomere Elemente umfassen.

16. Heckkonus für Flugzeug (1) nach einem der vorhergehenden Ansprüche, **dadurch gekennzeichnet, dass** die Elemente, aus denen sich die Stützkonstruktion (10) zusammensetzt, mittels gelenkiger Befestigungsmittel (34), Mittel zur festen Befestigung, Mittel zur halb-festen Befestigung und einer Kombination davon aneinander befestigt sind.

17. Heckkonus für Flugzeug (1) nach einem der vorhergehenden Ansprüche, **dadurch gekennzeichnet, dass** die Elemente, aus denen sich die Stützkonstruktion (10) zusammensetzt, eine Anordnung von längliche Elementen (22) und eine Anordnung von quer verlaufenden Elementen (23) umfassen.

18. Heckkonus für Flugzeug (1) nach Anspruch 17, **dadurch gekennzeichnet, dass** die länglichen Elemente (22) der StützkonstrukLion (10) Stäbe sind und die quer verlaufenden Elemente (23) Rippen sind.

19. Heckkonus für Flugzeug (1) nach Anspruch 17, **dadurch gekennzeichnet, dass** sowohl die länglichen Elemente (22) als auch die quer verlaufenden Elemente (23) Stäbe sind.

20. Heckkonus für Flugzeug (1) nach einem der vorhergehenden Ansprüche, **dadurch gekennzeichnet, dass** die Elemente, aus denen sich die StützkonstrukLion (10) zusammensetzt, in einem einzigen Stück gemacht sind.

21. Heckkonus für Flugzeug (1) nach einem der Ansprüche 1 bis 19, **dadurch gekennzeichnet, dass** die Elemente, aus denen sich die Stützkonstruktion (10) zusammensetzt, durch das Befestigen verschiedener Teile aneinander gemacht sind.

22. Heckkonus für Flugzeug (1) nach einem der Ansprüche 1 bis 21, **dadurch gekennzeichnet, dass** die Teleskopschienen (16) zusätzlich auf der Stützkonstruktion (10) ruhen.

23. Heckkonus für Flugzeug (1) nach einem der vorhergehenden Ansprüche, **dadurch gekennzeichnet, dass** das Auspuffrohr (7) von der Stützkonstruktion (10) unabhängig vom Hilfstriebwerk (3) mittels konventioneller Befestigungen des Auspuffrohrs (7) gestützt ist.

24. Heckkonus für Flugzeug (1) nach einem der vorhergehenden Ansprüche, **dadurch gekennzeichnet, dass** der Lufteinlass (6) unabhängig vom Hilfstriehwerk (3) gestützt wird, indem er mittels konventioneller Befestigungen an der Stützkonstruktion (10) angebracht ist.

25. Heckkonus für Flugzeug (1) nach einem der Ansprüche 1 bis 23, **dadurch gekennzeichnet, dass** der Lufteinlass (6) unabhängig vom Hilfstriebwerk (3) gestützt ist, indem er mittels konventioneller Befestigungen am festen Vorderteil (11) angebracht ist.

26. Heckkonus für Flugzeug (1) nach einem der Ansprüche 1 bis 23, **dadurch gekennzeichnet, dass** der Lufteinlass (6) unabhängig vom Hilfstriebwerk (3) gestützt ist, indem er mittels konventioneller Befestigungen an der Stützkonstruktion (10) und dem festen Vorderteil (11) angebracht ist.

27. Heckkonus für Flugzeug (1) nach einem der Ansprüche 2 bis 26 in Kombination mit dem Rest des Rumpfes (4), **dadurch gekennzeichnet, dass** der vordere Ringrahmen (12) des festen Vorderteils (11) eine Anzahl von primären metallenen Befestigungsvorrichtungen (26) umfasst, und dass der Rest des Rumpfes (4) einen Verschluss-Ringrahmen (32) umfasst, welcher eine Anzahl von sekundären metallenen Befestigungsvorrichtungen (27) umfasst, so dass der Heckkonus (2) mittels einer Befestigung durch die primären metallenen Befestigungsvorrichtungen (26) und die sekundären metallenen Befestigungsvorrichtungen (27) am Rest des Rumpfes (4) befestigbar ist.

28. Heckkonus für Flugzeug (1) nach Anspruch 27 in Kombination mit dem Rest des Rumpfes (4), **dadurch gekennzeichnet, dass** die primären metallenen Befestigungsvorrichtungen (26) einige primäre Gegenbefestigungen umfassen, welche die Belastungen, die auf sie wirken, zum festen Vorderteil (11) des Heckkonus (2) weiterleiten, und die sekundären metallenen Befestigungsvorrichtungen (27) einige sekundäre Gegenbefestigungen umfassen, welche die Belastungen, die auf sie wirken, zum Rest des Rumpfes (4) weiterleiten.

29. Heckkonus für Flugzeug (1) nach Anspruch 27 oder 28 in Kombination mit dem Rest des Rumpfes (4), **dadurch gekennzeichnet, dass** die Positionen der primären metallenen Befestigungsvorrichtungen (26) des vorderen Ringrahmens (12) des festen Vorderteils (11) mit den Positionen der metallenen Befestigungsvorrichtungen (21) der Stützkonstruktion (10) des festen Vorderteils (11) übereinstimmen.

30. Heckkonus für Flugzeug (1) nach einem der Ansprüche 1 bis 26 in Kombination mit dem Rest des Rumpfes (4), **dadurch gekennzeichnet, dass** die Befestigung zwischen dem Heckkonus (2) und dem Rest des Rumpfes (4) durch ein kontinuierliches Umfangs-Befestigungsmittel, welches die Abdeckung (8) des Heckkonus (2) direkt an einer Abdeckung des Rests des Rumpfes (4) befestigt, und Mittel zum Verstärken des Befestigungsmittels am Umfang erfolgt.

31. Heckkonus für Flugzeug (1) nach einem der vorhergehenden Ansprüche, **dadurch gekennzeichnet, dass** der feste Vorderteil (11) zusätzlich ein Brandscholt (5) umfasst.

## Revendications

1. Pointe arrive pour avion (1), comprenant un capot (8) qui contient une unité de puissance auxiliaire (3) et un ensemble de systèmes auxiliaires comprenant une admission d'air (6) et un tuyau d'échappement (7), le capot (8) de ladite pointe arrière (2) comprenant une section avant fixe (11) à l'aide de laquelle la pointe arrière (2) peut être attachée au reste du fuselage (4) et un carénage mobile (9), ledit capot (8) contenant une structure de support (10) constituée d'un ensemble d'éléments et fixée à la section avant fixe (11), ladite structure de support (10) supportant l'unité de puissance auxiliaire (3) et les éléments auxiliaires (6, 7) de celle-ci, le carénage mobile (9) se déplaçant entre une position fermée, dans laquelle ledit carénage mobile (9) est attaché à la section avant fixe (11) et où le capot (8) reste fermé, renfermant à l'intérieur de celui-ci la structure de support (10), l'unité de puissance auxiliaire (3) et les éléments auxiliaires (6, 7) de celle-ci, et une position ouverte, dans laquelle le capot (8) reste, ouvert, laissant la structure de support (10), l'unité de puissance auxiliaire (3) et les éléments auxiliaires (6, 7) de celle-ci exposés et offrant un accès à ceux-ci, la pointe arrière (2) étant **caractérisée en ce que** le carénage mobile (9) se déplace de façon longitudinale à l'aide de rails télescopiques (16) qui sont fixés à la section avant fixe (11), lesdits rails télescopiques (16) étant agencés longitudinalement par rapport à l'avion (1), entre la position, fermée, dans laquelle ledit carénage mobile (9) est attaché à la section avant, fixe (11) et où le capot (8) reste fermé, renfermant à l'intérieur de celui-ci la structure de support (1.0), l'unité de puissance auxiliaire (3) et les éléments auxiliaires (6, 7) de celle-ci, et la position ouverte, dans laquelle ledit carénage mobile (9) est séparé de la section avant fixe (11), et où le capot (8) reste couvert, laissant la structure de support (10) l'unité de puissance auxiliaire (3) et les éléments auxiliaires (6, 7) de celle-ci exposés, et offrant un accès à ceux-ci.

2. Pointe arrière pour avion (1) selon la revendication 1, **caractérisée en ce que** la section avant fixe (11) comprend un cadre annulaire avant (12) et un cadre annulaire arrière (13), et un panneau de recouvrement (14) et des éléments de rigidification (15) entre le cadre annulaire avant (12) et le cadre annulaire arrière (13).

3. Pointe arrière pour avion (1) selon l'une quelconque des revendications précédentes, **caractérisée en ce que** le capot (8) comprend, à l'extrémité arrière de celui-ci, un carénage mobile supplémentaire pliant (ou), ledit carénage mobile supplémentaire (36) étant attaché au carénage mobile (9) à l'aide de moyens d'articulation supplémentaires (38) qui comprennent un axe de rotation, le carénage mobile supplémentaire (36) tournant autour de l'axe de rotation des moyens d'articulation supplémentaire (38), laissant la structure de support (10), l'unité de puissance auxiliaire (3) et les éléments auxiliaires (6, 7) de celle-ci exposés à la partie arrière de la pointe arrière (2).

4. Pointe arrière pour avion (1) selon la revendication 3, **caractérisée en ce que** le carénage mobile supplémentaire est pliable à l'avant, ledit carénage mobile supplémentaire (36) étant attache au carénage mobile (9) à l'aide de moyens d'articulation supplémentaire (38) qui comprennent un axe de rotation horizontal qui est perpendiculaire à l'axe longitudinal de l'avion (1), le carénage mobile supplémentaire (36) tournant autour de l'axe de rotation horizontal des moyens d'articulation supplémentaires (38).

5. Pointe arrière pour avion (1) selon la revendication 1, **caractérisée en ce que** le capot (8) de la pointe arrière (2) comprend, à la partie arrière de celui-ci, un carénage d'extrémité fixe (20) qui entoure le tuyau d'échappement (7) de l'unité de puissance auxiliaire (3) et qui est verrouillé sur celui-ci et reste fixe, constituant la partie centrale du capot (8) du carénage mobile (9), ledit carénage mobile (9) se déplaçant de façon longitudinal, laissant le carénage d'extrémité fixe (20) à l'intérieur de celui-ci, entre la position fermée, dans laquelle il reste entre la section avant fixe (11) et le carénage d'extrémité fixe (20) attaché à la section avant fixe (11) et au carénage d'extrémité fixe (20), et la position ouverte, dans laquelle il est séparé de la section avant fixe (11) ayant dépassé le carénage d'extrémité fixe (20), et le capot (8) reste ouvert, laissant la structures de support (10) et l'unité de puissance auxiliaire (3) exposés et offrant un accès à celles-ci.

6. Pointe arrière pour avion (1) selon l'une quelconque des revendications 1 à 5, **caractérisée en ce que** chacun des rails télescopiques (16) comprend une section fixe (28) qui est attachée directement à la section avant fixe (11), qui s'appuie sur le cadre annulaire avant (12) et sur le cadre annulaire arrière (13) de celle-ci, et un certain nombre de sections mobiles coulissantes (29), la dernière desdites sections mobile (29) étant attachée à des demi cadres annulaires (30) ou à des cadres annulaires couplets qui sont fixés au carénage mobile (9) à l'aide de raccords de fixation métalliques (31).

7. Pointe arrière pour avion (1) selon l'une quelconque des revendications 2 à 6, **caractérisée en ce que** le carénage mobile (9) comprend à l'extrémité de celui-ci, attaché à la section avant fixe (11), un cadre annulaire de fermeture (18) qui est fixé au cadre annulaire arrière (13) de ladite section avant fixe (11) l'aide d'ancrages de fixation conventionnels (19).

8. Pointe carrière pour avion (1) selon l'une quelconque des revendications précédentes, **caractérisée en ce que** le carénage mobile (9) comprend des éléments de renforcement qui sont sélectionnés parmi des cadres annulaires, des demi-cadres annulaires, des lisses, des revêtements du type sandwich et une combinaison de ceux-ci.

9. Pointe arrière pour avion (1) selon l'une quelconque des revendications 2 à 8, **caractérisée en ce que** la structure de support (10) est attachée directement au cadre annulaire avant (12) de la section avant fixe (11) à l'aide de raccords de fixation métalliques (21).

10. Pointe arrière pour avion (1) selon l'une quelconque des revendications 2 à 8, **caractérisée en ce que** la structure de support (10) est attachée entre la cadre annulaire avant (12) et le cadre annulaire arrière (13) de la section avant fixe (11) à l'aide de raccords de fixation métalliques (21).

11. Pointe arrière pour avion (1) selon l'une quelconque des revendication 2 à 8, **caractérisée en ce que** la structure de support (10) est, attachée directement au cadre annulaire arrière (13) de la section avant fixe (11) à l'aide de raccords du fixation métalliques (21).

12. Pointe arrière pour avion (1) selon la revendication 11, **caractérisée en ce que** des contre-raccords de fixation supplémentaires sont prévus entre le cadre annulaire avant (12) et le cadre annulaire arrière (13) de la section avant fixe (11) et servent à transmettre les contraintes d'une façon sûre.

13. Pointe arrière pour avion (1) selon l'une quelconque des revendication précédentes, **caractérisée en ce que** la structure de supports (10) supporte l'unité de puissance auxiliaire (3) par les parties supérieure et latérale de celle-ci à l'aide d'au moins trois points d'ancrage sur les éléments de fixation avant (24) et les éléments de fixation arrière (25) de l'unité de puissance auxiliaire (3).

14. Pointe arrière pour avion (1) selon la revendication 13, **caractérisée en ce que** les points d'ancrage de l'unité de puissance auxiliaire (3) à à la structure de support (10) comprennent des éléments d'amortissement de vibrations sur l'intérieur de ceux-ci.

15. Pointe arrière pour avion (1) selon l'une quelconque des revendications 1 à 13, **caractérisée en ce que** les éléments qui constituent la structure de support (10) attachée aux points d'ancrage de l'unité de puissance auxiliaire comprennent des éléments élastomères aux extrémité de ceux-ci.

16. Pointe arrière pour avion (1) selon l'une quelconque des revendications précédentes, **caractérisée en ce que** les éléments qui constituent la structure de support (10) sont attaches les uns aux autres à l'aide de moyens de fixation articulés (34), de moyens de fixation fixes, de moyens de fixation semi-fixes, et d'une combinaison de ceux-ci.

17. Pointe arrière pour avion (1) selon l'une quelconque des revendications précédentes, **caractérisée en ce que** les éléments qui constituent la structure de support (10) comprennent; un ensemble d'éléments longitudinaux (22) et un ensemble d'éléments transversaux (23).

18. Pointe arrière pour avion (1) selon la revendication 17, **caractérisée en ce que** tant les éléments longitudinaux (22) de la structure de support (10) sont des barres, et les éléments transversaux (23) sont des nervures.

19. Pointe arrière pour avion (1) selon la revendication 17, **caractérisée en ce que** tant les éléments longitudinaux (22) que les éléments transversaux (23) sont des barres.

20. Pointe arrière pour avion (1) selon l'une quelconque des revendications précédentes, **caractérisée en ce que** les éléments qui constituent la structure de support (10) sont constitués d'une seule pièce.

21. Pointe arrière pour avion (1) selon l'une quelconque des revendications 1 à 19, **caractérisée en ce que** les éléments qui constituent la structure de support (10) sont réalisés par l'intermédiaire de la fixation de différentes parties les unes aux autres.

22. Pointe arrière pour avion (1) selon l'une quelconque des revendication 1 à 21, **caractérisée en ce que** les rails télescopiques (16) s'appuient en outre sur la structure de support (10).

23. Pointe arrière pour avion (1) selon l'une quelconque des revendications précédentes, **caractérisée en ce que** le tuyau d'échappement (7) est supporté par la structure de support (10) indépendamment de l'unité de puissance auxiliaire (3) à l'aide d'éléments de fixation conventionnels du tuyau d'échappement (7).

24. Pointe arrière pour avion (1) selon l'une quelconque des revendications précédentes, **caractérisée en ce que** l'admission d'air (6) est supporté indépendamment de l'unité de puissance auxiliaire (3), étant attachée à la structure de support (10) à l'aide d'éléments de fixation conventionnels.

25. Pointe arrière pour avion (1) selon l'une quelconque des revendications 1 à 23, **caractérisée en ce que** l'admission d'air (6) est supportée indépendamment de l'unité de puissance auxiliaire (3), étant attaches à la section avant fixe (11) à l'aide d'éléments de fixation conventionnels.

26. Pointe arrière pour avion (1) selon l'une quelconque des revendications 1 à 23, **caractérisée en ce que** l'admission d'air (6) est supportée indépendamment de l'unité de puissance auxiliaire (3), étant attachée à la structure de support (10) et à la section avant fixe (11) à l'aide d'éléments de fixation conventionnels.

27. Pointe arrière pour avion (1) selon l'une quelconque des revendications 2 à 26 en combinaison avec le reste du fuselage (4), **caractérisée en ce que** le cadre annulaire avant (12) de la section avant fixe (11) comprend un certain nombre de raccords de fixation métalliques primaires (36), et **en ce que** le reste du fuselage (4) comprend un cadre annulaire de fermeture (32) qui comprend un certain nombre de raccords de fixation métalliques secondaires (27), de telle sorte que la pointe arrière (2) puisse être attachée au reste du fuselage (4) par l'intermédiaire de la fixation des raccords de fixation métalliques primaires (26) et des raccords de fixation métalliques secondaires (27).

28. Pointe arrière pour avion (1) selon la revendication 27 en combinaison avec le reste du fuselage (4), **caractérisée en ce que** les raccords de fixation métalliques primaires (26) comprennent plusieurs contre-raccords primaires qui transmettent les contraintes reçues à la section avant fixe (11) de la pointe arrière (2), et les raccords de fixation métalliques secondaires (27) comprennent plusieurs contre-raccords secondaires qui transmettent les contraintes reçues au reste du fuselage (4).

29. Pointe arrière pour avion (1) selon l'une ou l'autre des revendications 27 ou 28 en combinaison avec le reste du fuselage (4), **caractérisée en ce que** les positions des raccords de fixation métalliques primaires (26) du cadre annulaire avant (12) de la section avant fixe (11) coïncident avec les positions des raccords de fixation métalliques (21) de la structure de support (10) avec ladite sections avant fixe (11).

30. Pointe arrière pour avion (1) selon l'une quelconque des revendications 1 à 26 en combinaison avec le reste du fuselage (4), **caractérisée en ce que** la fixation entre la pointe arrière (2) et le reste du fuselage (4) est réalisée à l'aide de moyens de fixation circonférentiels continus qui attachent, directement le capot (8) de la pointe arrière (2) une enveloppe du reste du fuselage (4), et de moyens pour renforcer lesdits moyens de fixation circonférentiels.

31. Pointe arrière pour avion (1) selon l'une quelconque des revendications précédentes, **caractérisée en ce que** la section avant fixe (11) comprend en outre une cloison pare-feu (5).
